# EUROPEAN PATENT APPLICATION

(11) **EP 4 015 358 A1**
(43) Date of publication of application: **22.06.2022**
(21) Application number: 20215245.0
(22) Date of filing: 17.12.2020
(51) Int. Cl.: B62M 3/00

(54) **PEDAL CRANK, PEDAL CRANK ASSEMBLY AND A BICYCLE HAVING A PEDAL CRANK ASSEMBLY**

(71) Applicant: Miranda & Irmão Lda., 3754-909 Águeda (PT)
(72) Inventor: Tavares Miranda, João Filipe, 3754-909 Águeda (PT)
(74) Representative: Freischem & Partner Patentanwälte mbB

(57) **Abstract**

The invention relates to a pedal crank, said pedal crank being attachable to a bottom bracket axle, said pedal crank having an attachment portion with a receptacle for receiving an end portion of said bottom bracket axle. A safety screw for securing the crank on the bottom bracket axle is guided in a thread formed in the attachment portion.

## Description

The invention relates to a pedal crank as well as to a pedal crank assembly and to a two-wheeler having a pedal crank assembly.

Prior art pedal cranks are known which can be attached to a bottom bracket axle. Such pedal cranks have a attachment portion with a receptacle for the bottom bracket axle. To connect the bottom bracket axle to the pedal crank, in particular one end portion of the bottom bracket axle is inserted into the receptacle provided for this purpose on the pedal crank.

There are also various solutions for fixing the pedal crank to the bottom bracket axle. However, many of the previous solutions offer insufficient protection against unintentional loosening of the crank from the axle.

A pedal crank arrangement is known from the prior art in the form of EP 1 661 803 B1, in which a pedal crank is fastened to a bottom bracket axle and is additionally secured against unintentional release from the crank by means of an additional plate-shaped retaining element. For this purpose, the plate-shaped retaining element engages with a projection in a recess on the bottom bracket axle.

However, the assembly of such a plate-shaped retaining element is comparatively complex; moreover, the plate-shaped retaining element requires a special design of the crank which allows the plate-shaped retaining element to be arranged in a gap.

It is therefore the object of the present invention to disclose a pedal crank, a pedal crank assembly, and a bicycle having a pedal crank assembly, which enables the pedal crank to be secured against unintentional release from the pedal crank axle, wherein the above-mentioned disadvantages do not occur or at least occur to a reduced extent.

The task is solved by a pedal crank, a pedal crank assembly and a bicycle having the features of the independent claims. The features of the dependent claims relate to advantageous embodiments.

The pedal crank can be attached to a bottom bracket axle. For this purpose, the pedal crank has a attachment portion with a receptacle for a bottom bracket axle.

A safety screw for securing the crank on the bottom bracket axle is guided in a thread formed in the attachment portion.

By guiding the safety screw in the thread formed in the attachment portion, the safety screw is easier to handle than the plate-shaped retaining elements known in the prior art. In particular, the safety screw can be screwed into the thread only to the extent that the safety screw is not lost and the safety screw will stay in place while the pedal crank is mounted to the bottom bracket axle, but does not interfere with the mounting process. If the pedal crank is fastened to the bottom bracket axle by means of suitable fasteners, tightening the safety screw can be used to additionally secure the pedal crank to the bottom bracket axle.

In particular, the pedal crank having a gap extending outwardly from said receptacle and dividing said attachment portion such that a bottom bracket axle received in said receptacle is only incompletely surrounded by said attachment portion due to said gap.

The gap makes it possible to embrace the bottom bracket axle with the attachment portion around to secure the pedal crank. This tensioning creates a frictional connection that prevents the pedal crank from being pulled off the bottom bracket axle. This allows a light and rigid connection to be created between the bottom bracket axle and the pedal crank. If this connection fails, the pedal crank is additionally held to the bottom bracket axle by the safety screw. The safety screw and the tensioning of the attachment portion around the bottom bracket axle are based on different mechanical principles and act independently of each other, so that genuine redundancy is created in securing the pedal crank to the bottom bracket axle.

In particular, the safety screw is arranged in the gap.

Surprisingly, it has been shown that the safety screw can be arranged in the gap. In particular, this makes it possible to achieve compatibility with existing systems, since the safety screw, when arranged at the gap, is located in the same place as the plate-shaped restraining element known in the prior art.

In particular, the axis of the locking screw is oriented at right angles to the axis of a bottom bracket axle received in the receptacle.

A perpendicular orientation of the safety screw to the axis of the bottom bracket axle allows the safety screw to engage the surface of the bottom bracket axle at a favorable angle.

In particular, the attachment portion has two surfaces facing each other which delimit the gap in the circumferential direction in relation to the axis of a bottom bracket axle received in the receptacle.

The limitation of the gap by two opposing surfaces represents a possible reasonable geometrical realization of the gap.

In particular, the thread being partly formed in each of the two surfaces.

By partially forming the thread into the two surfaces, the arrangement of the safety screw in the gap can be realized in a simple and reasonable way. In particular, the two parts of the thread can exert additional pressure on the safety screw when the attachment portion is tightened around the bottom bracket axis, thus ensuring an even tighter fit of the safety screw in the gap.

In particular, the pedal crank has a first screw for fixing the crank to the axle which is guided through the two surfaces bridging the gap, in particular at right angles.

Such a screw can be used to embrace the attachment portion around the bottom bracket axis. Due to the right-angled orientation of the screw to the two surfaces, the force flow in the area of the gap takes place in the circumferential direction, the orientation of the screw thus has an advantageous effect on the tensioning of the attachment portion around the bottom bracket axis.

In particular, the pedal crank has a second screw for fixing the crank to the axle which is guided through the two surfaces to bridge the gap, in particular at right angles.

The second screw improves the tensioning of the attachment portion around the bottom bracket axis. In addition, safety is increased because if one screw loosens and/or breaks, another screw still provides tensioning of the attachment portion around the bottom bracket axis.

In particular, the second screw is screwed into the attachment portion parallel and in the opposite direction to the first screw.

On the one hand, the alignment achieves a sensible flow of forces in the area of the gap. Since the two bolt heads are arranged on different sides of the gap, the material of the crank can absorb the mechanical stresses introduced by the bolts in a better distributed manner than if both bolt heads were located on the same side of the gap.

The pedal crank assembly comprises a bottom bracket axle and a crank as desribed above.The crank is attached to the bottom bracket axle. The safety screw for securing the connection between the bottom bracket axle and the crank engages in a recess in a radially outward facing surface of the bottom bracket axle.

The interaction of the safety bolt and a corresponding recess ensures a positive locking effect of the securing of the pedal crank to the bottom bracket axle. This type of securing also has a good securing effect when the safety bolt is only tightened with a low force. This means that the safety bolt can be dimensioned considerably smaller than would be necessary if the safety bolt were to act on the surface of the bottom bracket axle in a purely frictional or friction-locking manner.

In particular, the receptacle and the bottom bracket axle have complementary toothings to secure the crank against twisting on the bottom bracket axle.

Complementary toothings allow torque to be reliably transmitted between the pedal crank and the bottom bracket axle. In addition, such connections have a high degree of rigidity and can be easily implemented without play, particularly in combination with tensioning of the attachment portion of the pedal crank in the circumferential direction. As a result, a light and rigid connection between the bottom bracket axle and the pedal crank can be realized.

In particular, the bottom bracket axle can be designed as a hollow axle. Hollow axles with a comparatively large inner diameter are also possible with such a design of the connection between the pedal crank and the bottom bracket axle.

The Bicycle with the pedal crank assembly described above comprises drive train means, in particular a drive chain. The pedal crank as described above is arranged on the side of the bicycle facing away from the drive train means.

The arrangement of the pedal crank described above on the side of the bicycle facing away from the drive train means is advantageous. The pedal crank on this side does not have to be connected to chainrings or the like. Therefore, a detachable connection between the pedal crank and the bottom bracket axle, which requires appropriate fastening elements, such as screws in particular, can be realized more easily on this side of the bicycle than in the case of the pedal crank, which is located on the same side of the bicycle as the drive train means. In particular, the latter crank can be connected to the bottom bracket axle by means of a non-detachable connection. Such a connection can be friction-locked.

Further practical embodiments and advantages of the invention are described below in connection with the drawings. Showing:
- Fig. 1: a perspective view of an exemplary pedal crank arrangement,
- Fig. 2: a detailed representation of the attachment portion of the pedal crank from Fig. 1,
- Fig. 3: a schematic sectional view of the connection between the pedal crank and the bottom bracket axle.

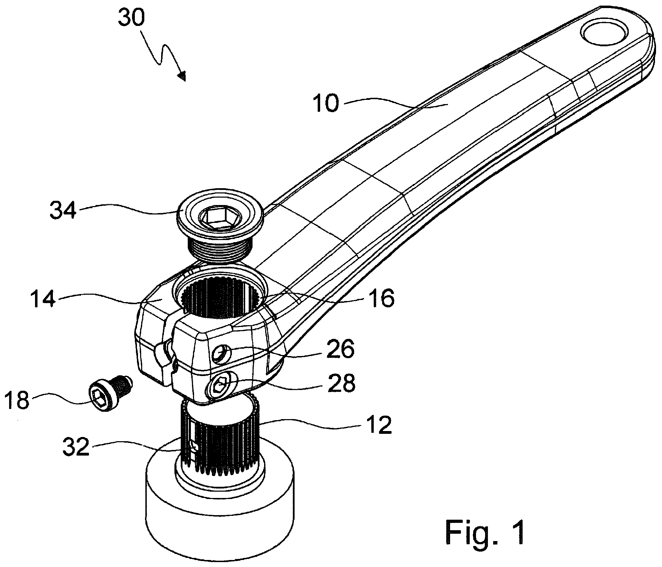

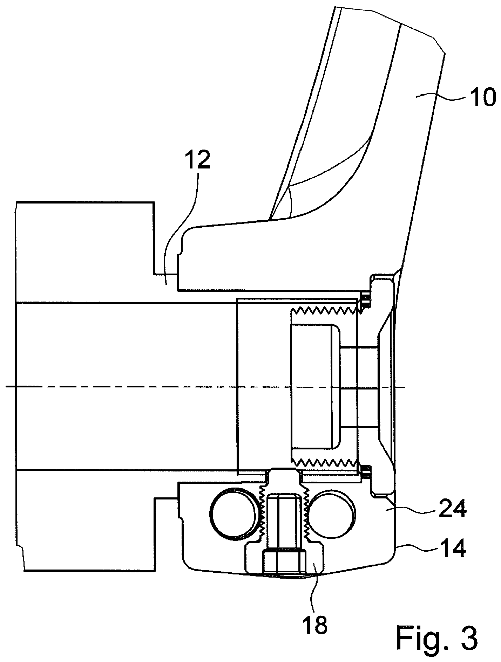

The pedal crank 10 shown in Fig. 1 can be attached to a bottom bracket axle 12 as shown in Fig. 3. For this purpose, the pedal crank 10 has an attachment portion 14 with a receptacle 16 for the bottom bracket axle 12. A safety screw 18 for securing the crank 10 on the bottom bracket axle 12 is guided in a thread 20 formed in the attachment portion 14.

As exemplarily shown in the Figures, the pedal crank 10 may have a gap 22 extending outwardly from said receptacle 16 and dividing said attachment portion 14 in a way that the bottom bracket axle 12 received in said receptacle 16 is only incompletely surrounded by said attachment portion 14 due to said gap 22.

As shown in the Figures, the safety screw 18 may be arranged in the gap 22. The axis of the locking screw 22 may be oriented at right angles to the axis of a bottom bracket axle 12 received in the receptacle 16, as it is exemplarily shown.

As shown in the Figures, the attachment portion 14 may have two surfaces 24 facing each other and delimiting the gap 22 in the circumferential direction in relation to the axis of a bottom bracket axle 12 received in the receptacle 16. The thread 20 may be partly formed in each of the two surfaces 24, as it is exemplarily shown.

As shown in the Figures, the pedal crank 10 may have a first screw 26 for fixing the crank 10 to the axle 12. The screw 26 may be guided through the two surfaces 24 bridging the gap 22, in particular at right angles.

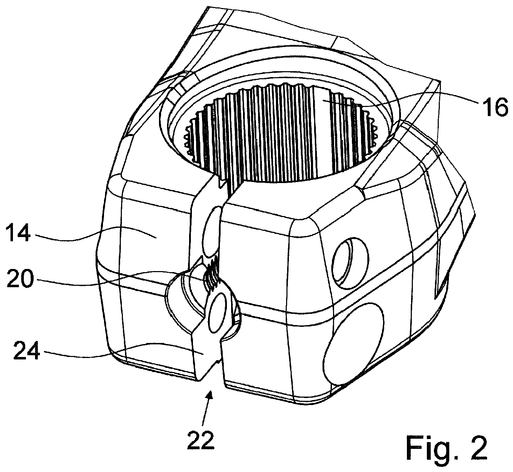

The pedal crank 10 may have a second screw 28 for fixing the crank 10 to the axle 12. The second screw 28 may be guided through the two surfaces 24 to bridge the gap 22, in particular at right angles. In Figures 2 and 3, The first crew 26 and the second screw 28 are not shown.

As shown especially in Fig. 1, the second screw 28 may be screwed into the attachment portion 14 parallel and in the opposite direction to the first screw 26.

As exemplarily shown in the Figures, the pedal crank assembly 30 may comprise a bottom bracket axle 12 and a crank 10 as shown. The crank 10 may be attached to the bottom bracket axle12. The safety screw 18 for securing the connection between the bottom bracket axle 12 and the crank 10 engages in a recess 32 in a radially outward facing surface of the bottom bracket axle 12.

As shown especially in Figs. 1 and 2, the receptacle 16 and the bottom bracket axle 12 may have complementary toothings to secure the crank 10 against twisting on the bottom bracket axle 12.

The pedal crank 10 may be designed to be arranged on the side of the bicycle facing away from the drive train means, as the pedal crank shown in the Figures. An screw 34 oriented parallel to the axis of the axle 12 may be used to fix the crank 10 to the axle 12 alternatively and/or additionally.

The features of the invention disclosed in the present description, in the drawings as well as in the claims may be essential, both individually and in any combination, for the realization of the invention in its various embodiments. The invention is not limited to the embodiments described. It may be varied within the scope of the claims and with due regard to the knowledge of the person skilled in the art.

### List of reference signs

- 10: pedal crank
- 12: bottom bracket axle
- 14: attachment portion
- 16: receptacle
- 18: safety screw
- 20: thread
- 22: gap
- 24: surface
- 26: first screw
- 28: second screw
- 30: pedal crank assembly
- 32: recess
- 34: screw

## Claims

**1.** Pedal crank (10), said pedal crank (10) being attachable to a bottom bracket axle (12), said pedal crank (10) having an attachment portion (14) with a receptacle (16) for receiving an end portion of said bottom bracket axle (12),
**characterised in that** a safety screw (18) for securing the crank (10) on the bottom bracket axle (12) is guided in a thread formed in the attachment portion (14).

**2.** Pedal crank (10) according to claim 1, **characterised in that** the pedal crank (10) having a gap (22) extending outwardly from said receptacle (16) and dividing said attachment portion (14) such that a bottom bracket axle (12) received in said receptacle (16) is only incompletely surrounded by said attachment portion (14) due to said gap (22).

**3.** Pedal crank (10) according to claim 2, **characterised in that** the safety screw (18) is arranged in the gap (22).

**4.** Pedal crank (10) according to one of the previous claims, **characterised in that** the axis of the locking screw is oriented at right angles to the axis of a bottom bracket axle (12) received in the receptacle (16).

**5.** Pedal crank (10) according to one of claims 2 to 4, **characterised in that** the attachment portion (14) has two surfaces (24) facing each other which delimit the gap (22) in the circumferential direction in relation to the axis of a bottom bracket axle (12) received in the receptacle (16).

**6.** Pedal crank (10) according to claim 5, **characterised in that** the thread (20) being partly formed in each of the two surfaces (24).

**7.** Pedal crank (10) according to one of the previous claims, **characterised in that** the pedal crank (10) has a first screw (26) for fixing the crank (10) to the axle (12) which is guided through the two surfaces (24) bridging the gap (22), in particular at right angles.

**8.** Pedal crank (10) according to claim 5, **characterised in that** the pedal crank (10) has a second screw (28) for fixing the crank (10) to the axle (12) which is guided through the two surfaces (24) to bridge the gap (22), in particular at right angles.

**9.** Pedal crank (10) according to claim 8, **characterised in that** the second screw (28) is screwed into the attachment portion (14) parallel and in the opposite direction to the first screw (26).

**10.** Pedal crank assembly, comprising a bottom bracket axle (12) and a crank (10) according to one of the previous claims, the crank (10) being attached to bottom bracket axle (12),
**characterised in that** the safety screw (18) for securing the connection between the bottom bracket axle (12) and the crank (10) engages in a recess (32) in a radially outward facing surface of the bottom bracket axle (12).

**11.** Pedal crank assembly according to claim 12, **characterised in that** the receptacle (16) and the bottom bracket axle (12) have complementary toothings to secure the crank (10) against twisting on the bottom bracket axle (12).

**12.** Pedal crank assembly according to claim 12 or 13, **characterised in that** the bottom bracket axle (12) is a hollow axle.

**14.** Bicycle with a pedal crank assembly according to one of claims 10 to 12 and a drive train means, in particular a drive chain, **characterised in that** the pedal crank (10) according to one of claims 1 to 9 is arranged on the side of the bicycle facing away from the drive train means.
